# EUROPÄISCHE PATENTSCHRIFT

(11) **EP 3 101 271 B1**
(45) Veröffentlichungstag und Bekanntmachung des Hinweises auf die Patenterteilung: **18.09.2019**
(21) Anmeldenummer: 16172475.2
(22) Anmeldetag: 01.06.2016
(51) Int. Cl.: F03D 1/00, F03D 13/40, B66C 1/10

(54) **SYSTEM UND VERFAHREN ZUM TRANSPORTIEREN UND HEBEN EINES ROTORBLATTS EINER WINDENERGIEANLAGE**
SYSTEM AND METHOD FOR TRANSPORTING AND LIFTING A ROTOR BLADE OF A WIND TURBINE
SYSTEME ET PROCEDE DE TRANSPORT ET DE LEVAGE D'UNE PALE DE ROTOR D'UNE EOLIENNE

(30) Priorität: 01.06.2015 DE 102015006778
(43) Veröffentlichungstag der Anmeldung: 07.12.2016
(73) Patentinhaber: Senvion GmbH, 22297 Hamburg (DE)
(72) Erfinder: Steck, Christian, 22927 Großhansdorf (DE); Singer, Frank, 22605 Hamburg (DE)
(74) Vertreter: Glawe, Delfs, Moll

(56) Entgegenhaltungen:
- EP-A1- 2 623 768
- EP-A1- 2 832 988
- DE-A1-102015 119 623
- GB-A- 2 482 707
- US-A1- 2006 251 517
- US-A1- 2012 192 420

## Beschreibung

Die Erfindung betrifft ein Hebe- und Transportsystem für ein Rotorblatt Windenergieanlage. Das System umfasst einen Transportrahmen, der mit einer Blattstütze für ein Rotorblatt ausgestattet ist, und ein Hebemittel zum Abheben des Rotorblatts von der Blattstütze. Die Erfindung betrifft außerdem ein zugehöriges Verfahren.

Insbesondere bei der Montage von Offshore-Windenergieanlagen werden die Rotorblätter häufig erst an dem Ort mit der Rotornabe verbunden, an dem die Windenergieanlage errichtet wird. Die auf einem Transportrahmen ruhenden Rotorblätter werden mit einem Schiff zum Ort der Offshore-Windenergieanlage transportiert. Zum Abheben des Rotorblatts von dem Transportrahmen dient ein Hebemittel, das mit dem Rotorblatt verbunden wird. Das Hebemittel wird mit einem Kran an das Rotorblatt herangeführt. Nachdem das Hebemittel mit dem Rotor verbunden wurde, hebt der Kran das Hebemittel zusammen mit dem Rotor an und bringt es in eine für die Montage geeignete Position.

Während der Entnahme des Rotorblattes aus dem Transportrahmen und während des Installationsvorgangs können hohe Windgeschwindigkeiten mit wechselnden Windrichtungen auftreten, kann die Handhabung des Rotorblattes beträchtlich erschweren können.

Ein kritischer Schritt ist das Anbringen des Hebemittels an dem Rotorblatt. Gelingt es nicht, das Hebemittel präzise an das Rotorblatt heranzuführen, kann es zu einer Kollision zwischen dem Hebemittel und dem Rotorblatt kommen. Dabei kann das Rotorblatt beschädigt werden.

Transportrahmen und Hebemittel sind im Stand der Technik in unterschiedlichen Ausführungsformen bekannt. Für Transportrahmen verweisen wir beispielhaft auf EP 2 796 709 A1, EP 2 669 506 A1 und EP 2 487 363 A1. Für Hebemittel verweisen wir beispielhaft auf EP 2 832 988 A1, WO 2012/062352 A1, DE 20 2010 003 033 U1 und WO 2008/061797 A1. Ein System aus einem Transportrahmen und einem Hebemittel ist zudem aus GB 2 482 707 A und aus US 2012 / 0192420 A1 bekannt.

Der Erfindung liegt die Aufgabe zugrunde, ein System und ein Verfahren zum Heben und Transportieren eines Rotorblatts vorzustellen, bei denen das Risiko einer Beschädigung des Rotorblatts vermindert ist. Ausgehend vom genannten Stand der Technik wird die Aufgabe gelöst mit den Merkmalen des Anspruchs 1. Vorteilhafte Ausführungsformen sind in den Unteransprüchen angegeben.

Das Hebe- und Transportsystem zeichnet sich erfindungsgemäß dadurch aus, dass der Transportrahmen eine Führungsschiene für das Hebemittel aufweist.

Durch die erfindungsgemäße Führungsschiene wird erreicht, dass das Hebemittel mit dem Transportrahmen in Eingriff gebracht werden kann, während das Hebemittel noch auf Abstand zu dem Rotorblatt ist. Indem das Hebemittel bei der weiteren Annäherung an das Rotorblatt in Eingriff mit der Führungsschiene gehalten wird, ist es einfacher, das Hebemittel zu steuern und in eine präzise Position relativ zu dem Rotorblatt zu bringen.

Das Risiko einer Kollision zwischen dem Hebemittel und dem Rotorblatt, bei der das Rotorblatt beschädigt wird, ist vermindert.

Das Hebemittel umfasst ein Führungsglied, das für einen Eingriff mit der Führungsschiene des Transportrahmens ausgelegt ist. Das Führungsglied kann sich bei der Annäherung des Hebemittels an das Rotorblatt entlang der Führungsschiene bewegen. Das Führungsglied kann so angeordnet sein, dass das Hebemittel einen Abstand von dem Rotorblatt hat, wenn der Eingriff zwischen dem Führungsglied und der Führungsschiene hergestellt wird.

Die Führungsschiene kann an ihrem Einführende, an dem das Führungsglied des Hebemittels mit der Führungsschiene in Eingriff gebracht wird, eine Aufweitung im Querschnitt aufweisen. Von der Aufweitung kann es einen kontinuierlichen Übergang in die Führungsschiene geben, entlang dem sich das Führungsglied in die Führungsschiene hinein zentrieren kann. Die Aufweitung kann in Längsrichtung und/oder in Querrichtung bezogen auf die Längsachse des Rotorblatts erfolgen. Bezogen auf die Führungsschiene kann die Aufweitung symmetrisch sein. Die Querschnittsfläche der Aufweitung ist vorzugsweise um wenigstens 10%, weiter vorzugsweise um wenigstens 50%, weiter vorzugsweise um wenigstens 100% größer als die Querschnittsfläche der Führungsschiene. In einer bevorzugten Ausführungsform ist die Aufweitung eine trichterförmige Erweiterung am oberen Ende der Führungsschiene.

Um das Einführen des Führungsglieds in die Führungsschiene zu erleichtern, kann das Führungsglied eine Beweglichkeit relativ zu einer Tragestruktur des Hebemittels aufweisen. Beispielsweise kann eine Auslenkung des Führungsglieds aus einer Mittelposition heraus möglich sein. Die Aufhängung des Führungsglieds kann ein Federelement aufweisen, das in Richtung der Mittelposition wirkt.

Durch die Führungsschiene wird vorzugsweise eine lineare Bewegungsrichtung des Hebemittels relativ zu dem Transportrahmen definiert. Bevorzugt ist die Führungsschiene senkrecht ausgerichtet, weil es dann am einfachsten ist, das Hebemittel mit einem Kran entlang der Führungsschiene zu bewegen. In der Führungsschiene kann ein Anschlag vorgesehen sein, der eine Position des Hebemittels relativ zu der Führungsschiene definiert. Der Anschlag kann so positioniert sein, dass das Hebemittel mit dem Rotorblatt verbunden werden kann, wenn das Hebemittel an dem Anschlag anliegt. Der Anschlag kann verstellbar sein, sodass das Hebemittel relativ zu verschiedenen Rotorblättern positioniert werden kann.

Die Führungsschiene und/oder das Führungsglied kann mit einer Rolle ausgestattet sein, die die Bewegung des Führungsglieds entlang der Führungsschiene fördert. Die Achse der Rolle schließt mit der Richtung der Führungsschiene vorzugsweise einen rechten Winkel ein. Die Rolle kann so angeordnet sein, dass sie das Führungsglied in zwei unterschiedlichen Richtungen gegenüber der Führungsschiene abstützt.

In einer bevorzugten Ausführungsform ist an der Führungsschiene und/oder dem Führungsglied eine Mehrzahl von Rollen angeordnet, wobei weiter vorzugsweise die Achsen aller Rollen einen rechten Winkel mit der Richtung der Führungsschiene einschließen. Die Mehrzahl von Rollen kann so ausgelegt sein, dass sie das Führungsglied in unterschiedlichen Richtungen gegenüber der Führungsschiene abstützen. Insbesondere können zwei Rollen so angeordnet sein, dass die Richtung der Achse der ersten Rolle mit der Richtung der Achse der zweiten Rolle einen rechten Winkel einschließt. In einer bevorzugten Ausführungsform ist das Führungsglied mit zwei Rollen ausgestattet, deren Achsen um 90° gegeneinander versetzt sind.

Der Transportrahmen kann ein blattspitzenseitiges Rahmenteil und ein blattwurzelseitiges Rahmenteil umfassen. Das blattwurzelseitige Rahmenteil ist dazu ausgelegt, dass Rotorblatt nahe der Blattwurzel abzustützen. Insbesondere kann das blattwurzelseitige Rahmenteil benachbart zur Stirnseite des Rotorblatts angeordnet sein, wenn das Rotorblatt auf dem Transportrahmen ruht. Das blattspitzenseitige Rahmenteil ist in einem Abstand zur Blattwurzel angeordnet. Da das Rotorblatt sich möglichst wenig durchbiegen soll, wenn es auf dem Transportrahmen ruht, hat das blattspitzenseitige Rahmenteil regelmäßig auch zur Blattspitze einen Abstand.

Der Transportrahmen ist erfindungsgemäß so gestaltet, dass eine Mehrzahl von Rotorblättern übereinander transportiert werden kann. Insbesondere kann der Transportrahmen dazu ausgelegt sein, bis zu vier übereinander angeordnete Rotorblätter zu transportieren. Die Führungsschiene ist erfindungsgemäß so gestaltet, dass sie das Hebemittel an jedes der übereinander angeordneten Rotorblätter heranführen kann. Unabhängig davon, welches Rotorblatt angehoben werden soll, kann das Hebemittel immer an der gleichen Stelle in die Führungsschiene eingeführt werden, nämlich vorzugsweise am oberen Ende der Führungsschiene. Das Hebemittel wird dann desto weiter entlang der Führungsschiene nach unten geführt, je weiter unten das anzuhebende Rotorblatt liegt. Die Führungsschiene ist zu diesem Zweck vorzugsweise länger als der einfache Durchmesser eines Rotorblatts, weiter vorzugsweise länger als der zweifache Durchmesser eines Rotorblatts.

Der Durchmesser bezieht sich auf den Durchmesser an der Blattwurzel. Die Führungsschiene kann aus mehreren übereinander angeordneten Abschnitten zusammengesetzt sein, die so zueinander ausgerichtet sind, dass sie nacheinander von dem Hebemittel durchlaufen werden können. Insbesondere kann jedem der Rotorblätter ein Abschnitt der Führungsschiene zugeordnet sein. Die Abschnitte können so mit dem Transportrahmen verbunden sein, dass ein Ausgleich von Fertigungstoleranzen möglich ist und dass die Abschnitte durch das Führungsglied passend zueinander ausgerichtet werden.

Der Transportrahmen kann ferner ausgelegt sein, eine Mehrzahl solcher Dreier-Stapel nebeneinander zu transportieren. Insbesondere kann der Transportrahmen drei nebeneinander angeordnete Dreier-Stapel umfassen, sodass insgesamt neun Rotorblätter gleichzeitig transportiert werden können.

Die erfindungsgemäße Führungsschiene kann an dem blattwurzelseitigen Rahmenteil angeordnet sein. Die Führungsschiene kann zwei in Längsrichtung des Rotorblatts wirkende Führungsflächen aufweisen, die dazu ausgelegt sind, das Führungsglied des Hebemittels zwischen sich einzuschließen. Die Führungsschiene kann eine weitere Führungsfläche umfassen, die das Führungsglied des Hebemittels in seitlicher Richtung abstützt. Die Führungsschiene kann so ausgelegt sein, dass sie das Führungsglied des Hebemittels darüber hinaus auch in die entgegengesetzte seitliche Richtung abstützt. Möglich sind auch Ausführungsformen, bei denen das Führungsglied in der entgegengesetzten Richtung keine feste Führung in der Führungsschiene hat.

Das blattwurzelseitige Rahmenteil kann eine erste Führungsschiene und eine zweite Führungsschiene aufweisen. Das Hebemittel kann zwei zugehörige Führungsglieder aufweisen. Beide Führungsschienen und beide Führungsglieder können die Merkmale aufweisen, die im Zusammenhang einer Führungsschiene/eines Führungsglieds beschrieben sind. Die beiden Führungsschienen können parallel zueinander ausgerichtet sein. Die Führungsschienen können so positioniert sein, dass das Hebemittel zwischen den Führungsschienen angeordnet ist, wenn die Führungsglieder des Hebemittels mit beiden Führungsschienen in Eingriff stehen. Die beiden Führungsschienen können so ausgelegt sein, dass sie in entgegengesetzten seitlichen Richtungen Führung bieten, sodass das mit beiden Führungsschienen in Eingriff stehende Hebemittel in beiden seitlichen Richtungen geführt ist.

Insbesondere können die Führungsschienen so gestaltet sein, dass sie jeweils nach außen hin keine Führung für das Führungsglied des Hebemittels bieten. Das Führungsglied kann über seine äußere Fläche mit dem Rahmen des Hebemittels verbunden sein, sodass das Führungsglied die Führungsschiene quasi von außen umgreift.

Das blattspitzenseitige Rahmenteil kann ebenfalls mit einer oder mehreren Führungsschienen ausgestattet sein. Die Führungsschienen des blattspitzenseitigen Rahmenteils können dieselben Merkmale aufweisen, die im Zusammenhang einzelner Führungsschienen oder im Zusammenhang der Führungsschienen des blattwurzelseitigen Rahmenteils beschrieben sind. Das Hebemittel umfasst vorzugsweise Führungsglieder, die dazu ausgelegt sind, in die Führungsschienen des blattspitzenseitigen Rahmenteils einzugreifen.

Der Transportrahmen kann eine Blattstütze umfassen, auf der das Rotorblatt während des Transports ruht. Die Blattstütze sollte eine an die Kontur des Rotorblatts angepasste Stützfläche aufweisen. Mit dem Hebemittel wird das Rotorblatt nach oben von der Blattstütze abgehoben. Nach dem Abheben des betreffenden Rotorblatts kann die Blattstütze hinderlich bei der Handhabung der darunter angeordneten Rotorblätter sein. Sowohl beim Heranführen des Hebemittels an das darunter angeordnete Rotorblatt als auch beim Anheben des darunter angeordneten Rotorblatts kann die im Hebebereich angeordnete Blattstütze des oberen Rotorblatts stören.

Um die Handhabung von übereinander angeordneten Rotorblättern zu erleichtern, kann die Blattstütze zwischen einem aktiven Zustand und einem passiven Zustand bewegbar sein. Im aktiven Zustand ist die Blattstütze im Hebebereich angeordnet. Es kann also eine Rotorblatt auf der Blattstütze aufliegen, allerdings stört die Blattstütze bei der Handhabung eines darunter angeordneten Rotorblatts. Im passiven Zustand ist die Blattstütze aus dem Hebebereich zurückgezogen. Die Blattstütze stört also nicht bei der Handhabung des darunter angeordneten Rotorblatts. Ein Transportrahmen mit einer solchen bewegbaren Blattstütze hat eigenständigen erfinderischen Gehalt, der von dem Hebemittel des erfindungsgemäßen Systems unabhängig ist.

Die Bewegung der Blattstütze zwischen dem aktiven Zustand und dem passiven Zustand kann beispielsweise entlang einer Linearführung erfolgen. Die Linearführung kann sich in horizontaler Richtung erstrecken. Die Linearführung kann sich parallel zur Längsachse des Rotorblatts erstrecken. Die Betätigung der Linearführung kann beispielsweise über Kettenzüge oder Spindeln erfolgen. Das Werkzeug zur Betätigung der Linienführung kann dasselbe sein, das auch zur Sicherung der Rotorblätter an dem Transportrahmen verwendet wird.

Die zusammenwirkenden Komponenten der Linearführung können aus Metall bestehen. Zwischen den zusammenwirkenden Komponenten kann eine reibungsmindernde Beplankung vorgesehen sein, sodass die Reibung verglichen mit einem direkten Metall/Metall-Kontakt vermindert ist.

Das Hebemittel umfasst vorzugsweise eine Tragestruktur, die sich als starre Verbindung zwischen einem ersten Hebeabschnitt und einem zweiten Hebeabschnitt erstreckt. Im Bereich der Hebeabschnitte wird die Verbindung zwischen dem Hebemittel und dem Rotorblatt hergestellt, um das Rotorblatt anheben zu können. Die Tragestruktur kann beispielsweise als Gitterrohrstruktur ausgebildet sein.

Vorzugsweise ist in den Hebeabschnitten jeweils eine Verbindungseinrichtung vorgesehen, über die das Rotorblatt mit dem Hebemittel verbunden werden kann. Die Verbindungseinrichtung kann ein Auflageteil umfassen, das auf der Oberfläche des Rotorblatts aufliegt, wenn das Hebemittel passend zu dem Rotorblatt positioniert ist. Das Auflageteil kann austauschbar sein, damit die Verbindungseinrichtung an unterschiedliche Konturen von Rotorblättern angepasst werden kann. Die Verbindungseinrichtung kann außerdem einen Gurt umfassen, der sich wenigstens abschnittsweise über den Umfang des Rotorblatts erstreckt. Vorzugsweise liegt das Auflageteil oben auf dem Rotorblatt auf, während der Gurt sich wenigstens abschnittsweise um das Rotorblatt herum erstreckt, um das Rotorblatt relativ zu dem Auflageteil zu fixieren. Die Verbindung mittels eines Gurts hat den Vorteil, dass das Hebemittel leicht von dem Rotorblatt gelöst werden kann, nachdem das Rotorblatt mit der Rotornabe verbunden wurde. Die Oberfläche des Gurtes ist dabei so ausgeführt, dass eine genügend hohe Reibkraft beim Anheben des Rotorblattes vorhanden ist, um eine relative Verdrehung des Rotorblattes zum Hebemittel zu verhindern.

Das Rotorblatt ist vorzugsweise so auf dem Transportrahmen gelagert, dass die Lagerposition möglichst weitgehend der späteren Montageposition entspricht. Ist also das die Längsachse des Rotorblatts im Wesentlichen horizontal ausgerichtet, wenn das Rotorblatt auf dem Transportrahmen liegt, so wird das Rotorblatt vorzugsweise auch mit im Wesentlichen horizontaler Ausrichtung an die Rotornabe herangeführt. Auch die Winkelausrichtung des Rotorblatts bezogen auf seine Längsachse wird zwischen der Transportposition und der Montageposition vorzugsweise im Wesentlichen beibehalten. Das Rotorblatt kann dann direkt an die Rotornabe herangeführt werden, nachdem es mit dem Hebemittel verbunden wurde, ohne dass eine komplizierte Neuausrichtung des Rotorblatts erforderlich ist.

Wird das Rotorblatt mit im Wesentlichen horizontaler Längsachse an der Rotornabe montiert, so vollführt die Blattspitze eine erhebliche elastische Bewegung zwischen der Position, in der sie am Hebemittel aufgehängt ist, und der Position, in der das Rotorblatt nur noch über die Blattwurzel gehalten wird. Würde man das Hebemittel einfach lösen, nachdem die Verbindung zwischen dem Rotorblatt und der Rotornabe hergestellt ist, würde die elastische Spannung, unter der das Rotorblatt steht sich in einer schwingenden Bewegung der Blattspitze entladen. Bei einer solchen schwingenden Bewegung besteht ein hohes Risiko, dass das Rotorblatt Schaden nimmt. Um dies zu vermeiden, kann im Rahmen der Erfindung vorgesehen sein, dass die von der Blattwurzel entfernte Verbindungseinrichtung des Hebemittels entspannt wird, bevor das Rotorblatt von der Verbindungseinrichtung gelöst wird.

Das Hebemittel kann deswegen eine in vertikaler Richtung verstellbare Verbindungseinrichtung aufweisen. Damit wird es möglich, die Verbindungseinrichtung nach unten abzulassen, bevor das Rotorblatt von der Verbindungseinrichtung gelöst wird. Es wäre möglich, die Verbindungseinrichtung an Seilen hängend abzusenken. Allerdings besteht dann das Risiko, dass das Hebemittel und das Rotorblatt durch die Einwirkung von Wind anfangen zu schwingen. Bevorzugt umfasst das Hebemittel deswegen eine Vertikalführung, entlang derer die Verbindungseinrichtung abgelassen werden kann. Vertikalführung bedeutet, dass sich die Verbindungseinrichtung nur in einer Richtung relativ zu der Tragestruktur des Hebemittels bewegen kann, während die Position der Verbindungseinrichtung in einer zur Vertikalführung senkrechten Ebene eindeutig definiert ist. Ein Hebemittel mit einer vertikal verstellbaren Verbindungseinrichtung hat unabhängig von dem Transportrahmen des Systems einen eigenständigen erfinderischen Gehalt.

Das Hebemittel ist vorzugsweise so eingerichtet, dass die vertikale Verstellung der Verbindungseinrichtung über eine Fernbedienung in Gang gesetzt werden kann. Ebenso kann die Entriegelung der Verbindungseinrichtung, über die das Rotorblatt von der Verbindungseinrichtung gelöst wird vorzugsweise über eine Fernbedienung betätigt werden. Es ist dann nicht erforderlich, dass eine Person sich in diesem Bereich des Hebemittels bewegt, der nach der Montage des Rotorblatts nur schwer zugänglich ist. Für den Fall eines Defekts der Fernbedienung können die vertikale Verstellung der Verbindungseinrichtung und/oder die Entriegelung der Verbindungseinrichtung zusätzlich auch rein mechanisch bedienbar sein.

Das Hebemittel sollte so gestaltet sein, dass es unter den bei der Offshore-Montage herrschenden Bedingungen möglichst nicht in Schwingung versetzt wird. Es hat sich gezeigt, dass das Risiko von Schwingungen durch eine Auflastung des Hebemittels beträchtlich vermindert werden kann. Beispielsweise kann das Hebemittel mit zusätzlichen Gewichtsstücken versehen werden, deren Masse in Summe beispielsweise zwischen 50 % und 400 %, vorzugsweise zwischen 100 % und 300 % in der Masse der Tragestruktur des Hebemittels liegen kann. Liegt das Gewicht der Tragestruktur beispielsweise bei 40 t bis 50 t, so kann die Auflastung zwischen 50 t und 100 t liegen. Das Gewicht des Hebemittels kann, oder um einen Faktor 3 bis 5 höher liegen als das Gewicht des zu transportierenden Rotorblatts. Die Gewichtsstücke können einzeln verwendbar sein, sodass das Hebemittel jeweils individuell an die Bedingungen bei der Montage angepasst werden kann.

Das Hebemittel kann außerdem für das Anheben eines Transportrahmens ausgelegt sein, auf dem eines oder mehrere Rotorblätter gelagert sind. Vorzugsweise umfasst das Hebemittel zu diesem Zweck eine Verbinderstruktur, über die das Hebemittel mit dem Transportrahmen verbunden werden kann. Das Hebemittel kann dann an Land genutzt werden, um den Transportrahmen mitsamt den Rotorblättern auf ein Schiff zu verladen. Vorzugsweise wird auch das Hebemittel zusammen mit dem Transportrahmen und den Rotorblättern auf dem Schiff transportiert, sodass bei der Montage vor Ort dasselbe Hebemittel zum Einsatz kommen kann. Damit das Hebemittel zum Abheben des Transportrahmens verwendet werden kann, muss es zwischen den Elementen des Transportrahmens an das Rotorblatt herangeführt werden können. Dazu ist es von Vorteil, wenn das Hebemittel eine verminderte Länge hat. In einer vorteilhaften Ausführungsform ist deswegen ein Endstück des Hebemittels einklappbar. Vorzugsweise ist wenigstens eines der einklappbaren Endstücke mit einer Verbinderstruktur versehen, über die das Hebemittel mit dem Transportrahmen verbunden werden kann, so dass der Transportrahmen mit den Rotorblättern angehoben werden kann. Weiter vorzugsweise ist das Hebemittel an jedem seiner beiden Enden mit einem einklappbaren Endstück versehen. Auch das zweite einklappbare Endstück kann mit einer Verbinderstruktur zum Herstellen einer Verbindung zu dem Transportrahmen versehen sein. Alternativ kann das zweite Endstück auch deswegen einklappbar, damit das Hebemittel leichter im Gleichgewicht gehalten werden kann.

Die Erfindung betrifft außerdem ein Verfahren nach Anspruch 13.

Nicht beansprucht ist ein Verfahren zum Lösen eines Rotorblatts von einem Hebemittel. Bei dem Verfahren wird ein Rotorblatt, dessen Längsachse im Wesentlichen horizontal ausgerichtet ist, an einer Rotornabe montiert. Eine von der Blattwurzel beabstandete Verbindungseinrichtung wird relativ zu einer Tragestruktur des Hebemittels abgesenkt. Die Verbindungseinrichtung wird von dem Rotorblatt gelöst.

Die Verfahren können mit weiteren Merkmalen fortgebildet werden, die im Zusammenhang des erfindungsgemäßen Systems beschrieben sind. Das System kann mit weiteren Merkmalen fortgebildet werden, die im Zusammenhang der erfindungsgemäßen Verfahren beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Ansicht von oben auf einen Transportrahmen mit einer Mehrzahl von Rotorblättern;
- Fig. 2:: einen Ausschnitt aus einem Transportrahmen mit einer Mehrzahl von Rotorblättern in einer seitlichen Ansicht;
- Fig. 3:: ein Detail eines erfindungsgemäßen Transportrahmens mit Führungsschiene;
- Fig. 4:: ein Detail eines erfindungsgemäßen Hebemittels mit Führungsglied;
- Fig. 5:: ein Detail eines erfindungsgemäßen Systems;
- Fig. 6:: ein Detail eines erfindungsgemäßen Hebemittels der Blattaufnahme wurzelseitig;
- Fig. 7:: ein Detail eines erfindungsgemäßen Hebemittels der Blattaufnahme spitzenseitig;
- Fig. 8:: ein erfindungsgemäßes Hebemittel mit einem daran aufgehängten Rotorblatt;
- Fig. 9:: einen Ausschnitt aus einem Transportrahmen mit einer Mehrzahl von Rotorblättern in einer seitlichen Ansicht;
- Fig. 10:: die Ansicht gemäß Fig. 9 in einem anderen Zustand des Transportrahmens;
- Fig. 11:: ein Detail des Transportrahmens in vergrößerter Darstellung;
- Fig. 12:: ein Detail aus Fig. 11;
- Fig. 13:: ein Detail eines erfindungsgemäßen Hebemittels;
- Fig. 14:: das Detail gemäß Fig. 13 in einem anderen Zustand des Hebemittels; und
- Fig. 15:: ein weiteres Detail des Hebemittels.

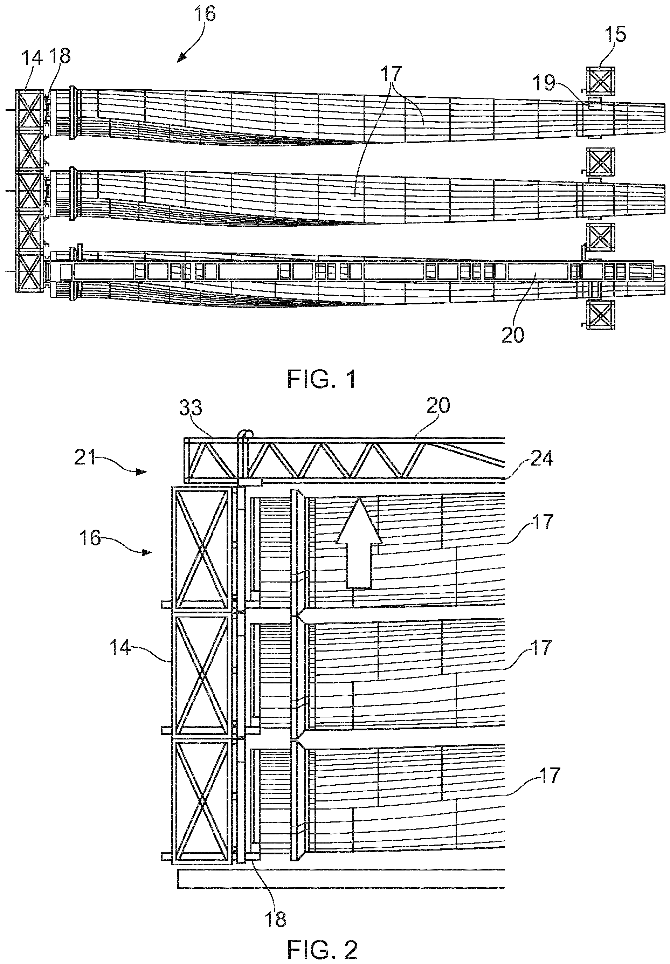

Ein in Fig. 1 gezeigter Transportrahmen 16 umfasst ein blattwurzelseitiges Rahmenteil 14 und ein blattspitzenseitiges Rahmenteil 15. Auf dem Transportrahmen 16 sind insgesamt neun Rotorblätter 17 angeordnet, wobei jeweils drei Rotorblätter 17 übereinander gestapelt sind und drei Dreier-Stapel nebeneinander angeordnet sind. Das Rahmenteil 14 und das Rahmenteil 15 umfassen jeweils neun Blattstützen 18, sodass jedes Rotorblatt 17 auf einer Blattstütze 18 des Rahmenteils 14 und auf einer Blattstütze 19 des Rahmenteils 15 ruht.

Der Transportrahmen 16 wird an Land mit bis zu neun Rotorblättern 17 bestückt und steht dann als eine Einheit für den weiteren Transport bereit. Um den Transportrahmen 16 mit den neun Rotorblättern 17 auf ein Schiff zu verladen, wird ein Hebemittel 20 mit dem blattwurzelseitigen Rahmenteil 14 und dem blattspitzenseitigen Rahmenteil 15 verbunden. Das Hebemittel 20 umfasst eine gitterartige Tragestruktur 24, die sich in entsprechender Länge erstreckt. In Fig. 2 ist eine Verbinderstruktur 21 angedeutet, die eine Verbindung zwischen dem Rahmenteil 14 und dem Hebemittel 20 bildet. Die Verbinderstruktur 21 ist oberhalb des mittleren der drei Rotorblatt-Stapel angeordnet. Indem mit einem Kran (nicht dargestellt) an dem Hebemittel 20 angegriffen wird, kann das Hebemittel 20 zusammen mit dem Transportrahmen 16 und den Rotorblättern 17 angehoben werden und auf ein Schiff verladen werden. Das Hebemittel 20 wird anschließend wieder von dem Transportrahmen 16 gelöst und ebenfalls auf dem Schiff abgelegt.

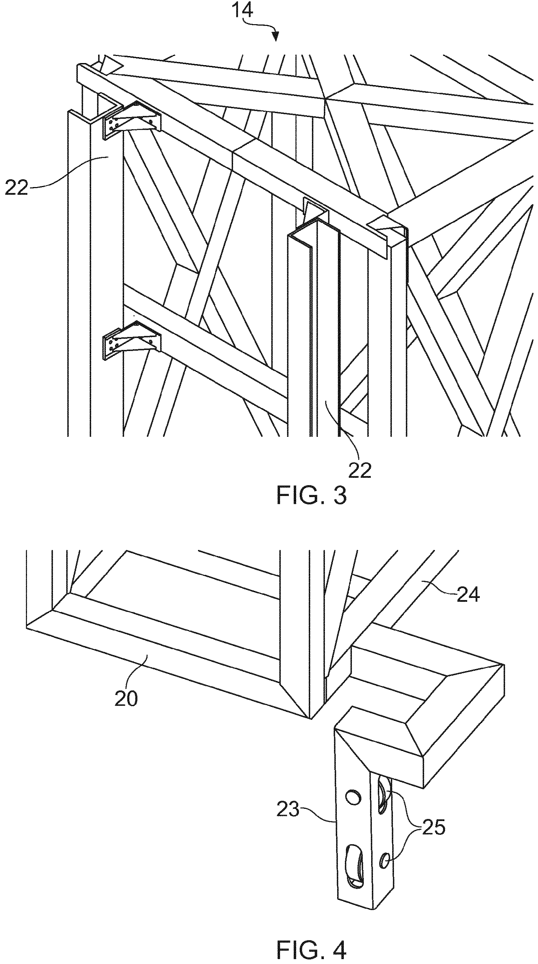

Das blattwurzelseitige Rahmenteil 14 umfasst für jeden der Dreier-Stapel von Rotorblättern 17 ein Paar von Führungsschienen 22, die sich in vertikaler Richtung über die Höhe des Rahmenteils 14 erstrecken. In Fig. 3 ist eines der Paare von Führungsschienen 22 ausschnittsweise gezeigt. Die beiden Führungsschienen 22 schließen die vertikale Achse eines Dreier-Stapels mittig zwischen sich ein. Die Führungsschienen 22 sind zu drei Seiten hin durch rechtwinklig aufeinander stehende Führungsflächen begrenzt. Die nach außen weisenden Seiten der Führungsschienen 22 sind offen. Des Weiteren sind die Führungsschienen so am Transportrahmen angebunden, das ein Ausgleich von z.B. Fertigungstoleranzen zwischen den einzelnen Transportrahmen möglich ist.

Das Hebemittel 20 umfasst zwei Führungsglieder 23, die dazu ausgelegt sind, in die Führungsschienen 22 des Rahmenteils 14 einzugreifen. In Fig. 4 ist eines der Führungsglieder 23 dargestellt. Das Führungsglied 23 ist so mit der Tragestruktur 24 des Hebemittels 20 verbunden, dass das Führungsglied 23 von außen in die zugehörige Führungsschiene 22 eingreifen kann. In dem Führungsglied 23 sind zwei Rollen 25 ausgebildet, die dazu ausgelegt sind, mit den Führungsflächen der Führungsschiene 22 zusammenzuwirken, um eine widerstandsarme Bewegung der Führungsglieder 23 entlang der Führungsschienen 22 zu ermöglichen.

Entsprechende Führungsschienen 22 sind auch an dem blattspitzenseitigen Rahmenteil 15 ausgebildet, sodass die Ausrichtung des Hebemittels 20 relativ zu dem Transportrahmen 16 eindeutig definiert ist, wenn alle Führungsglieder 23 des Hebemittels mit den zugehörigen Führungsschienen 22 in Eingriff stehen.

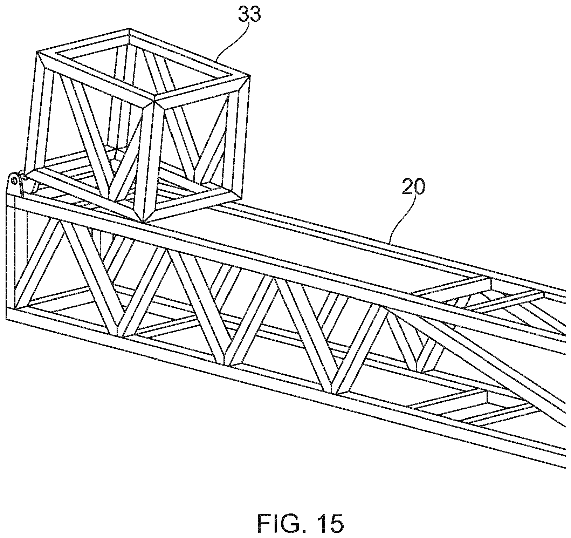

Das Hebemittel 20 wird von oben an den Transportrahmen 16 herangeführt, so dass die Führungsglieder 23 des Hebemittels 20 in Verlängerung der Führungsschienen 22 des Transportrahmens 16 angeordnet sind. Das Hebemittel 20 umfasst zwei einklappbare Endstücke 33. Gemäß Fig. 2 liegt das Endstück 33 auf dem blattwurzelseitigen Rahmenteil 14 auf, wenn das Hebemittel 20 dazu verwendet wird, den Transportrahmen 16 mit Rotorblättern 17 anzuheben. Das Endstück 33 wird eingeklappt, damit das Endstück 33 beim Einführen des Hebemittels 20 in die Führungsschienen 22 nicht an dem Rahmenteil 14 anstößt. Damit das Hebemittel 20 im Gleichgewicht bleibt, wird das an dem gegenüberliegenden Ende des Hebemittels 20 angeordnete Endstück 33 ebenfalls eingeklappt. Ein Endstück 33 im eingeklappten Zustand ist in Fig. 15 dargestellt.

Wird das Hebemittel 20 nun langsam abgelassen, treten die Führungsglieder 23 von oben in die Führungsschienen 22 ein.

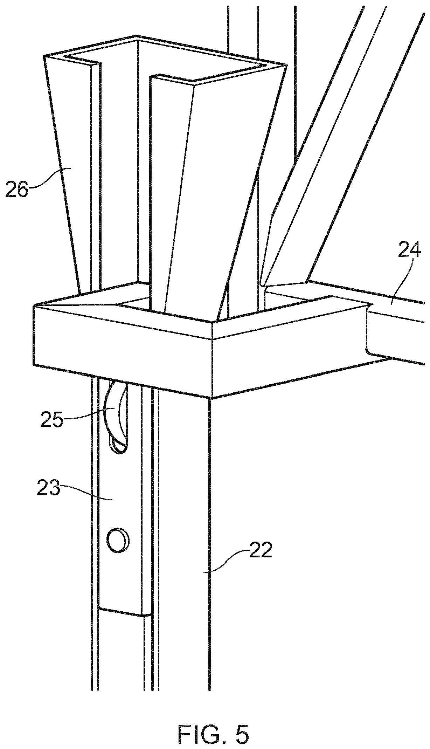

Um das Einführen der Führungsglieder 23 zu erleichtern, können die Führungsschienen 22 gemäß Fig. 5 an ihrem oberen Ende mit einer trichterförmigen Erweiterung 26 versehen sein. In die trichterförmigen Erweiterungen 26 können die Führungsglieder 23 auch dann eintreten, wenn das Hebemittel 20 nicht ganz exakt relativ zu den Führungsschienen 22 positioniert ist. Entlang der schrägen Flächen der trichterförmigen Erweiterung 26 zentrieren sich die Führungsglieder 23 beim weiteren Ablassen des Hebemittels 20 selbsttätig. Es ist zu diesem Zwecke hilfreich, wenn die Führungsglieder 23 eine eingeschränkte Beweglichkeit relativ zu der Tragestruktur 24 des Hebemittels 20 haben.

Das Hebemittel 20 wird dann bis zu einem in den Führungsschienen 22 angeordneten Anschlag (nicht gezeigt) abgelassen. Der Anschlag ist so positioniert, dass das Hebemittel 20 in der richtigen Position ist, um mit dem Rotorblatt 17 verbunden zu werden.

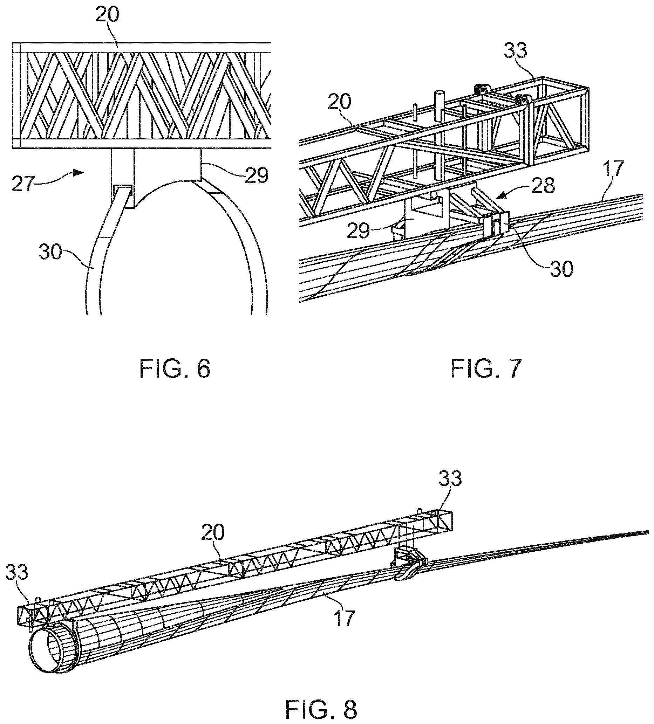

Für die Verbindung zu dem Rotorblatt 17 umfasst das Hebemittel eine blattwurzelseitige Verbindungseinrichtung 27 und eine blattspitzenseitige Verbindungseinrichtung 28. Die Verbindungseinrichtungen 27, 28 umfassen jeweils ein Auflageteil 29, das auf der Oberfläche des Rotorblatts 17 aufliegt, sobald das Hebemittel 20 an dem Anschlag der Führungsschienen 22 anstößt. Das Auflageteil 29 ist auswechselbar, sodass das Hebemittel 20 an unterschiedlich konturierte Rotorblätter 17 angepasst werden kann. Ausgehend von dem Auflageteil 29 wird dann ein Gurt 30 um das Rotorblatt 17 herum gespannt, um das Rotorblatt 17 an dem Hebemittel 20 zu befestigen. Zusammen mit dem Hebemittel 20 kann das Rotorblatt 17 nun von den Blattstützen 18 des Transportrahmens 16 abgehoben werden, siehe Fig. 8.

Zu Beginn des Anhebens gleiten die Führungsglieder 23 noch in den Führungsschienen 22 nach oben. Sobald die Führungsglieder 23 in den Bereich der trichterförmigen Erweiterung 26 gelangen, kann festgestellt werden, an welcher der Führungsflächen der trichterförmigen Erweiterung 26 die Führungsglieder 23 anliegen. Um zu verhindern, dass das Hebemittel 20 sich nach dem Austritt aus der trichterförmigen Erweiterung 26 sprunghaft in die betreffende Richtung bewegt, können Führungsleinen (nicht dargestellt) an dem Hebemittel 20 angebracht werden, die so gespannt werden, dass sich das Hebemittel 20 nach dem Austritt aus der trichterförmigen Erweiterung 26 senkrecht nach oben bewegt.

Mit dem Kran kann das Rotorblatt 17 nun an die Rotornabe (nicht dargestellt) herangeführt werden und mit der Rotornabe verbunden werden. Um das Risiko zu vermindern, dass das Hebemittel 20 mit dem Rotorblatt 70 in Schwingung gerät, ist das Hebemittel 20 mit mehreren Gewichtsstücken (nicht dargestellt) aufgelastet. Die gitterförmige Tragestruktur hat ein Gewicht von etwa 40 t bis 50 t. Die Gewichtsstücke können in Summe ein Gewicht von beispielsweise 100 t haben. Das Gewicht des Rotorblatts 17 kann beispielsweise bei 25 t liegen.

Zum anschließenden Lösen des Rotorblatts 17 von dem Hebemittel 20 wird die blattspitzenseitige Verbindungseinrichtung 28 über eine vertikale Verstelleinrichtung 31 nach unten abgelassen, um das Rotorblatt 17 zu entspannen. Die vertikale Verstelleinrichtung 31 ermöglicht eine lineare Bewegung nach unten. In allen anderen Richtungen ist die vertikale Verstelleinrichtung starr.

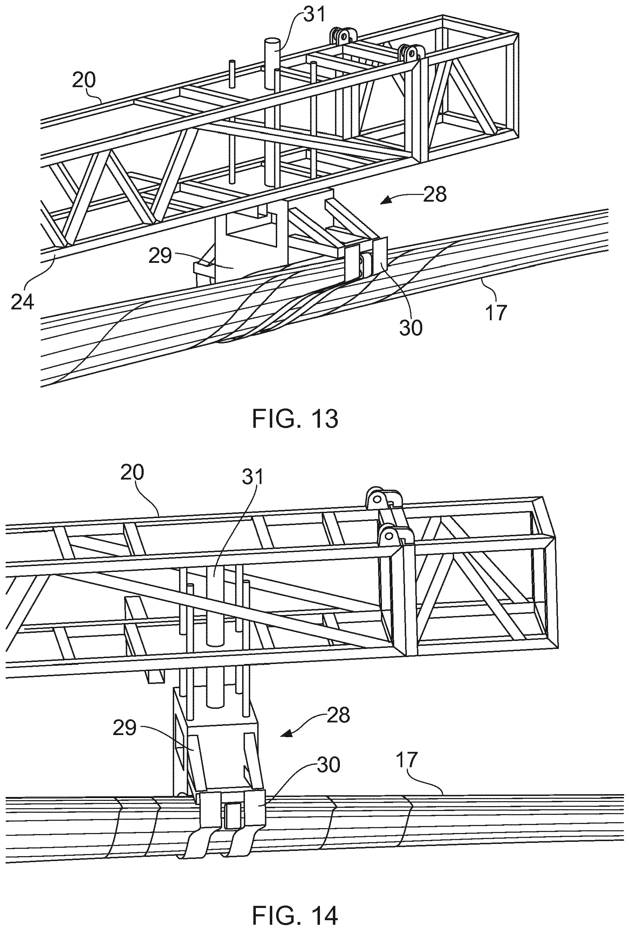

Die Fig. 13 zeigt die Verbindungseinrichtung 28 in der Montageposition, in der die Verbindungeinrichtung 28 unmittelbar benachbart zur Tragestruktur 24 des Hebemittels 20 angeordnet ist. In Fig. 14 ist die Verbindungseinrichtung 28 über die vertikale Verstelleinrichtung 31 nach unten abgelassen. In dieser Position ist das Rotorblatt 17 entspannt, und der Gurt 30 kann gelöst werden, ohne dass das Rotorblatt 17 in Schwingung gerät.

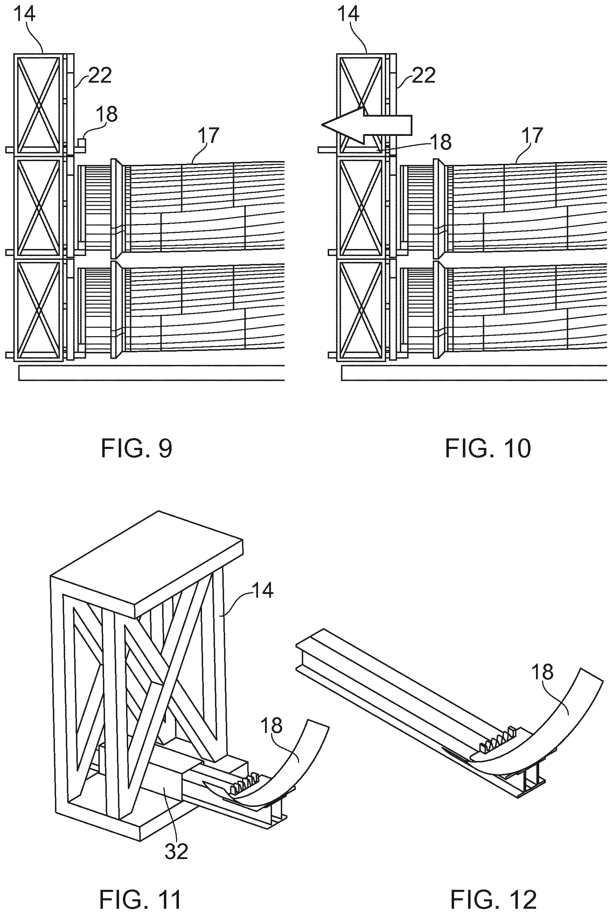

In Fig. 9 ist der Zustand des Transportrahmens 16 nach der Entnahme des obersten Rotorblatts 17 gezeigt. Die Blattstütze 18, auf der das oberste Rotorblatt 17 zuvor auflag, ragt in den Hebebereich hinein, der benötigt wird, um das darunterliegende Rotorblatt 17 anzuheben. Die Blattstütze 18 ist in einer horizontalen Schiebeführung 32 gelagert. Entlang der Schiebeführung 32 wird die Blattstütze 18 in eine zurückgezogene Position gebracht, in der sie den Hebebereich nicht mehr beeinträchtigt, siehe Fig. 10.

Der Anschlag in der Führungsschiene 22, an dem das Hebemittel 20 für die Aufnahme des obersten Rotorblatts 17 anlag, wird entfernt und so in der Führungsschiene 22 positioniert, dass er eine zu dem darunter angeordneten Rotorblatt 17 passende Position definiert. Das Hebemittel 20 kann nun entlang der Führungsschiene 22 bis zu dem zweiten Rotorblatt 17 abgelassen werden. Das zweite Rotorblatt 17 kann gemäß dem beschriebenen Ablauf von der Blattstütze 18 abgehoben werden und an der Rotornabe montiert werden.

## Patentansprüche

1. Hebe- und Transportsystem für ein Rotorblatt (17) einer Windenergieanlage mit einem Transportrahmen (16), der eine Blattstütze (18) für ein Rotorblatt (17) umfasst, und mit einem Hebemittel (20) zum Abheben des Rotorblatts (17) von der Blattstütze (18), wobei der Transportrahmen (16) zum Transport einer Mehrzahl übereinander angeordneter Rotorblätter (17) ausgebildet ist und eine Führungsschiene (22) für das Hebemittel (20) aufweist, wobei die Führungsschiene (22) zur Heranführung des Hebemittels (20) an jedes der übereinander angeordneten Rotorblätter (17) ausgestaltet ist, wobei das Hebemittel (20) ein Führungsglied (23) umfasst, das für einen Eingriff mit der Führungsschiene (22) des Transportrahmens (16) ausgelegt ist.

2. Hebe- und Transportsystem nach Anspruch 1, **dadurch gekennzeichnet, dass** das Führungsglied (23) eine Beweglichkeit relativ zu einer Tragestruktur (24) des Hebemittels (20) aufweist.

3. Hebe- und Transportsystem nach einem der Ansprüche 1 oder 2, **dadurch gekennzeichnet, dass** die Führungsschiene (22) und/oder das Führungsglied (23) mit einer Rolle (25) ausgestattet ist, die die Bewegung des Führungsglieds (23) entlang der Führungsschiene (22) fördert.

4. Hebe- und Transportsystem nach einem der Ansprüche 1 bis 3, **dadurch gekennzeichnet, dass** die Führungsschiene (22) an ihrem Einführende eine Aufweitung (26) im Querschnitt aufweist.

5. Hebe- und Transportsystem nach einem der Ansprüche 1 bis 4, **dadurch gekennzeichnet, dass** die Führungsschiene (22) einen Anschlag für das Hebemittel (20) umfasst und dass die Position des Anschlags einstellbar ist.

6. Hebe- und Transportsystem nach einem der Ansprüche 1 bis 5, **dadurch gekennzeichnet, dass** die Führungsschiene (22) länger ist als der einfache Durchmesser eines Rotorblatts (17), vorzugsweise länger als der zweifache Durchmesser eines Rotorblatts (17).

7. Hebe- und Transportsystem nach einem der Ansprüche 1 bis 6, **dadurch gekennzeichnet, dass** eine erste Führungsschiene (22) an einem blattwurzelseitigen Rahmenteil (14) des Transportrahmens (16) und eine zweite Führungsschiene (22) an einem blattspitzenseitigen Rahmenteil (15) des Transportrahmens (16) angebracht ist.

8. Hebe- und Transportsystem nach einem der Ansprüche 1 bis 7, **dadurch gekennzeichnet, dass** der Transportrahmen (16) eine Blattstütze (18) umfasst, die zwischen einer aktiven Position und einer passiven Position bewegbar ist.

9. Hebe- und Transportsystem nach Anspruch 8, **dadurch gekennzeichnet, dass** die Blattstütze (18) in einer Linearführung (32) geführt ist.

10. Hebe- und Transportsystem nach einem der Ansprüche 1 bis 9, **dadurch gekennzeichnet, dass** das Hebemittel (22) eine Verbindungseinrichtung (28) zum Herstellen einer Verbindung mit dem Rotorblatt (17) aufweist und dass die Verbindungseinrichtung (28) relativ zu einer Tragestruktur (24) des Hebemittels (20) bewegbar ist.

11. Hebe- und Transportsystem nach Anspruch 10, **gekennzeichnet durch** eine Fernbedienung zum Lösen der Verbindungseinrichtung (28).

12. Hebe- und Transportsystem nach einem der Ansprüche 1 bis 11, **dadurch gekennzeichnet, dass** das Hebemittel (20) ein einklappbares Endstück (33) aufweist.

13. Verfahren zum Abheben einer Mehrzahl von übereinander geordneten Rotorblättern von einem Transportrahmen, bei dem ein oben angeordnetes erstes Rotorblatt (17) von einer Blattstütze (18) des Transportrahmens (16) abgehoben wird, bei dem ein Hebemittel (20) in Eingriff mit einer Führungsschiene (22) des Transportrahmens (16) gebracht wird, bei dem das Hebemittel (20) entlang der Führungsschiene (22) an das erste Rotorblatt (17) angenähert wird, bei dem eine Verbindung zwischen dem Hebemittel (20) und dem ersten Rotorblatt (17) hergestellt wird und bei dem das Hebemittel (20) und das erste Rotorblatt (17) gemeinsam angehoben werden, bei dem die Blattstütze (18) aus dem Hebebereich zurückgezogen wird und bei dem ein zweites unterhalb des ersten Rotorblattes (17) angeordnetes Rotorblatt (17) auf gleiche Weise durch den Hebebereich nach oben gehoben wird.

## Claims

1. Lifting and transport system for a rotor blade (17) of a wind turbine, having a transport frame (16) which comprises a blade support (18) for a rotor blade (17), and having a lifting means (20) for lifting the rotor blade (17) off the blade support (18), wherein the transport frame (16) is designed to transport a plurality of rotor blades (17) arranged above one another and has a guide rail (22) for the lifting means (20), wherein the guide rail (22) is designed to guide the lifting means (20) up to each of the rotor blades (17) arranged above one another, wherein the lifting means (20) comprises a guide member (23) which is designed for engagement with the guide rail (22) of the transport frame (16).

2. Lifting and transport system according to Claim 1, **characterized in that** the guide member (23) has a movability relative to a supporting structure (24) of the lifting means (20).

3. Lifting and transport system according to either of Claims 1 and 2, **characterized in that** the guide rail (22) and/or the guide member (23) are/is equipped with a roller (25) which promotes the movement of the guide member (23) along the guide rail (22).

4. Lifting and transport system according to one of Claims 1 to 3, **characterized in that** the guide rail (22) has a widening (26) in cross section at its insertion end.

5. Lifting and transport system according to one of Claims 1 to 4, **characterized in that** the guide rail (22) comprises a stop for the lifting means (20), and **in that** the position of the stop is adjustable.

6. Lifting and transport system according to one of Claims 1 to 5, **characterized in that** the guide rail (22) is longer than one times the diameter of a rotor blade (17), preferably longer than two times the diameter of a rotor blade (17).

7. Lifting and transport system according to one of Claims 1 to 6, **characterized in that** a first guide rail (22) is mounted on a blade-root-side frame part (14) of the transport frame (16), and a second guide rail (22) is mounted on a blade-tip-side frame part (15) of the transport frame (16).

8. Lifting and transport system according to one of Claims 1 to 7, **characterized in that** the transport frame (16) comprises a blade support (18) which is movable between an active position and a passive position.

9. Lifting and transport system according to Claim 8, **characterized in that** the blade support (18) is guided in a linear guide (32).

10. Lifting and transport system according to one of Claims 1 to 9, **characterized in that** the lifting means (22) has a connection device (28) for producing a connection with the rotor blade (17), and **in that** the connection device (28) is movable relative to a supporting structure (24) of the lifting means (20).

11. Lifting and transport system according to Claim 10, **characterized by** a remote control for releasing the connection device (28).

12. Lifting and transport system according to one of Claims 1 to 11, **characterized in that** the lifting means (20) has an end piece (33) which can be folded in.

13. Method for lifting a plurality of rotor blades arranged above one another off a transport frame, in which a first rotor blade (17) arranged at the top is lifted off a blade support (18) of the transport frame (16), in which a lifting means (20) is brought into engagement with a guide rail (22) of the transport frame (16), in which the lifting means (20) is drawn near to the first rotor blade (17) along the guide rail (22), in which a connection is produced between the lifting means (20) and the first rotor blade (17) and in which the lifting means (20) and the first rotor blade (17) are raised together, in which the blade support (18) is withdrawn from the lifting region and in which a second rotor blade (17) arranged below the first rotor blade (17) is lifted upwards in the same way through the lifting region.

## Revendications

1. Système de levage et de transport d'une pale de rotor (17) d'une éolienne avec un cadre de transport (16), qui comprend un support de pale (18) pour une pale de rotor (17), et avec un moyen de levage (20) pour soulever la pale de rotor (17) du support de pale (18), dans lequel le cadre de transport (16) est configuré pour le transport d'une multiplicité de pales de rotor (17) disposées l'une au-dessus de l'autre et présente un rail de guidage (22) pour le moyen de levage (20), dans lequel le rail de levage (22) est configuré pour amener le moyen de levage (20) à chacune des pales de rotor (17) disposées l'une au-dessus de l'autre, dans lequel le moyen de levage (20) comprend un organe de guidage (23), qui est conçu de façon à s'engager avec le rail de guidage (22) du cadre de transport (16).

2. Système de levage et de transport selon la revendication 1, **caractérisé en ce que** l'organe de guidage (23) présente une mobilité par rapport à une structure de transport (24) du moyen de levage (20).

3. Système de levage et de transport selon une des revendications 1 ou 2, **caractérisé en ce que** le rail de guidage (22) et/ou l'organe de guidage (23) est équipé d'un galet (25), qui favorise le mouvement de l'organe de guidage (23) le long du rail de guidage (22).

4. Système de levage et de transport selon l'une quelconque des revendications 1 à 3, **caractérisé en ce que** le rail de guidage (22) présente à son extrémité d'introduction un élargissement (26) de la section transversale.

5. Système de levage et de transport selon l'une quelconque des revendications 1 à 4, **caractérisé en ce que** le rail de guidage (22) comprend une butée pour le moyen de levage (20) et **en ce que** la position de la butée est réglable.

6. Système de levage et de transport selon l'une quelconque des revendications 1 à 5, **caractérisé en ce que** le rail de guidage (22) est plus long que le simple diamètre d'une pale de rotor (17), de préférence plus long que le double du diamètre d'une pale de rotor (17).

7. Système de levage et de transport selon l'une quelconque des revendications 1 à 6, **caractérisé en ce qu'**un premier rail de guidage (22) est placé sur une partie de cadre côté pied de pale (14) du cadre de transport (16) et un second rail de guidage (22) est placé sur une partie de cadre côté pointe de pale (15) du cadre de transport (16).

8. Système de levage et de transport selon l'une quelconque des revendications 1 à 7, **caractérisé en ce que** le cadre de transport (16) comprend un support de pale (18), qui est mobile entre une position active et une position passive.

9. Système de levage et de transport selon la revendication 8, **caractérisé en ce que** le support de pale (18) est guidé dans un guidage linéaire (32).

10. Système de levage et de transport selon l'une quelconque des revendications 1 à 9, **caractérisé en ce que** le moyen de levage (22) présente un dispositif d'assemblage (28) pour réaliser un assemblage avec la pale de rotor (17) et **en ce que** le dispositif d'assemblage (28) est mobile par rapport à une structure de support (24) du moyen de levage (20).

11. Système de levage et de transport selon la revendication 10, **caractérisé par** une télécommande pour libérer le dispositif d'assemblage (28).

12. Système de levage et de transport selon l'une quelconque des revendications 1 à 11, **caractérisé en ce que** le moyen de levage (20) présente une pièce d'extrémité rabattable (33) .

13. Procédé de levage d'une multiplicité de pales de rotor disposées l'une au-dessus de l'autre au moyen d'un cadre de transport, dans lequel on soulève une première pale de rotor disposée en haut (17) d'un support de pale (18) du cadre de transport (16), dans lequel on amène un moyen de levage (20) en engagement avec un rail de guidage (22) du cadre de transport (16), dans lequel on approche le moyen de levage (20) de la première pale de rotor (17) le long du rail de guidage (22), dans lequel on réalise un assemblage entre le moyen de levage (20) et la première pale de rotor (17) et dans lequel on soulève ensemble le moyen de levage (20) et la première pale de rotor (17), dans lequel on retire le support de pale (18) hors de la région de levage et dans lequel on soulève vers le haut une deuxième pale de rotor (17) disposée en dessous de la première pale de rotor (17) de la même façon à travers la région de levage.
